(19) Europäisches Patentamt
European Patent Office
Office européen des brevets

(11) EP 4 301 796 B1

(12) EUROPEAN PATENT SPECIFICATION

(45) Date of publication and mention of the grant of the patent:
**24.12.2025 Bulletin 2025/52**

(21) Application number: **22715222.0**

(22) Date of filing: **01.03.2022**

(51) International Patent Classification (IPC):
***C08F 290/06*** *(2006.01)* ***C08L 69/00*** *(2006.01)*
***C08F 279/02*** *(2006.01)* ***C08L 51/04*** *(2006.01)*

(52) Cooperative Patent Classification (CPC):
(C-Sets available)
**C08L 51/04; C08F 279/02; C08F 290/062; C08L 69/00** (Cont.)

(86) International application number:
**PCT/US2022/018268**

(87) International publication number:
**WO 2022/187193 (09.09.2022 Gazette 2022/36)**

(54) **IMPACT MODIFIER WITH IMPROVED FLAMMABILITY**

SCHLAGZÄHMODIFIZIERER MIT VERBESSERTER ENTFLAMMBARKEIT

MODIFICATEUR D’IMPACT À INFLAMMABILITÉ AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2021 US 202163156963 P**

(43) Date of publication of application:
**10.01.2024 Bulletin 2024/02**

(73) Proprietor: **Rohm and Haas Company**
**Collegeville, PA 19426 (US)**

(72) Inventors:
- **ROHRBACH, William**
  **Perkasie, Pennsylvania 18944 (US)**
- **LUO, Pu**
  **Collegeville, Pennsylvania 19426 (US)**
- **KESSELMAYER, Mark A.**
  **Collegeville, Pennsylvania 19426 (US)**

(74) Representative: **Beck Greener LLP**
**Fulwood House**
**12 Fulwood Place**
**London WC1V 6HR (GB)**

(56) References cited:
**EP-A1- 3 031 836**
**US-A- 5 219 907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 279/02, C08F 220/14, C08F 212/08;**
**C08F 290/062, C08F 236/06;**
**C08L 69/00, C08K 5/005, C08K 5/42, C08L 25/12, C08L 27/18, C08L 51/04**

## Description

### FIELD OF THE INVENTION

This invention relates generally to multistage polymer compositions that are useful as impact modifiers. The compositions contain an organo-phosphorus monomer in the rubber core together with an organo-phosphorus soap.

### BACKGROUND

In the manufacture of products, there is the general desire to achieve ease of manufacture as well as lightweighting, i.e., reducing the weight of a product. Both of these objectives are achieved through the use of plastic, relative to the use of metal or ceramic. On the other hand, it is generally desirable for manufactured items to have low to no flammability which is provided by the use of metal or ceramic, but is generally not provided by the use of plastic.

Recently, plastic formulations have been developed with improved (i.e., lower) levels of flammability. In general, these formulations contain high levels of flame retardant additives in addition to anti-drip additives. These formulations have been able to achieve certain criteria as designated by UL (Underwriter Laboratories) that enable their use in the manufacture of electrical items as well as items for use under the hood of a car.

These plastic formulations generally have the requirement in use of substantial impact strength. However, the additives used to achieve lower flammability typically decrease the impact strength of the molded product. It is very common to add a core shell polymer impact modifier to these formulations to reach the required level of impact strength. However, the rubber (e.g., polybutadiene) used to make the core of these core shell impact modifiers is highly flammable and increases the flammability of the formulation in direct correlation to the amount utilized in the formulation. Thus, there exists a problem in the area of plastics formulation - achieving the proper balance of impact strength and flammability.

U.S. Patent No. 5,219,907 discloses the use of a core shell emulsion polymer that contains a phosphate monomer as part of the shell, where the core shell polymer can be used in a polycarbonate formulation. The amount of phosphate monomer is present in the shell in an amount ranging from 1 to 50 wt% based on the total weight of the shell. The impact modifier must be employed at 5-40% in the polycarbonate formulation.

EP 0 663 410 discloses the use of a high concentration of phosphorus monomer located in the shell to provide improved flammability. The phosphorus monomer is present in an amount ranging from 15 to 25 wt% based on the total weight of the final polymer. EP 3 031 836 A1 discloses phosphazene-containing rubber graft copolymers, wherein units derived from a phosphazene monomer may be present in the rubber part of the graft copolymer, and which may be used as impact modifiers in polycarbonate compositions.

Prior art attempts to reduce flammability have required high levels of phosphorus monomer located in the shell in order to obtain improved flammability.

Accordingly, there is a need to develop new processes and impact modifier polymer compositions that do not suffer from the drawbacks of the prior art, namely, mixtures of impact modifier polymer compositions and matrix resins that provide significant improvements in flammability that may be provided at low levels of phosphorus loading.

### SUMMARY OF THE INVENTION

One aspect of the invention provides a polymer composition comprising (i) one or more multistage polymers comprising (a) a first stage polymer, wherein the first stage polymer comprises polymerized units derived from at least one organo-phosphorus monomer in an amount of 2 wt.% or less, based on the total weight of the first stage polymer, and (b) a final stage polymer, and (ii) at least one organo-phosphorus soap in an amount of 50 ppm or more, based on the dry weight of the multistage polymer.

In another aspect, the invention provides a matrix resin composition comprising (A) a polymer composition comprising (i) one or more multistage polymers comprising (a) a first stage polymer, wherein the first stage polymer comprises polymerized units derived from at least one organo-phosphorus monomer in an amount of 2 wt.% or less, based on the total weight of the first stage polymer, and (b) a final stage polymer, and (ii) at least one organo-phosphorus soap in an amount of 50 ppm or more, based on the dry weight of the multistage polymer, and (B) one or more matrix resins.

### BRIEF DESCRIPTION OF THE DRAWINGS

FIG. 1 is a graph showing the total burn time after torch.

FIG. 2A and FIG. 2B show a photograph of an inventive composition and a comparative example after completion of a flame test and FIG. 2B shows a photograph

## DETAILED DESCRIPTION

The inventors have surprisingly found that the combination of incorporation of an organo-phosphorus monomer in the rubber core together with an organo-phosphorus soap improves the flammability of a core shell impact modifier. Further, the inventors have found that by incorporating the organo-phosphorus monomer in the rubber core, particularly when formed in the presence of an organo-phosphorus soap, improved flammability can be achieved at lower loading levels of the organo-phosphorus monomer.

As used herein, the term "polymer" refers to a polymeric compound prepared by polymerizing monomers, whether of the same or a different type. The generic term "polymer" includes the terms "homopolymer," "copolymer," "terpolymer," and "resin." As used herein, the term "polymerized units derived from" refers to polymer molecules that are synthesized according to polymerization techniques wherein a product polymer contains "polymerized units derived from" the constituent monomers which are the starting materials for the polymerization reactions. As used herein, the term "(meth)acrylate" refers to either acrylate or methacrylate or combinations thereof, and the term "(meth)acrylic" refers to either acrylic or methacrylic or combinations thereof. As used herein, the term "substituted" refers to having at least one attached chemical group, for example, alkyl group, alkenyl group, vinyl group, hydroxyl group, carboxylic acid group, other functional groups, and combinations thereof.

As used herein, the term "organo-phosphorus" refers to organic compounds containing phosphorus. As used herein, the term "phosphate" refers to an anion that is made up of phosphorous and oxygen atoms. Included are orthophosphate ($PO_4^{-3}$), the polyphosphates ($P_nO_{3n+1}{}^{-(n+2)}$ where n is 2 or larger), and the metaphosphates (circular anions with the formula $P_mO_{3m}{}^{-m}$ where m is 2 or larger). As used herein, an "alkaline phosphate" refers to a salt of an alkali metal cation with a phosphate anion. Alkaline phosphates include alkali metal orthophosphates, alkali metal polyphosphates, and alkali metal metaphosphates. Alkaline phosphates also include partially neutralized salts of phosphate acids, including, for example, partially neutralized salts of orthophosphoric acid such as, for example, monosodium dihydrogen phosphate and disodium hydrogen phosphate.

As used herein, the term "multistage polymer" refers to a polymer that is made by forming (i.e., polymerizing) a first polymer, called the "first stage" or the "first stage polymer," and then, in the presence of the first stage, forming a second polymer called the "second stage" or "second stage polymer," which can be an intermediate stage of final stage. A multistage polymer has at least a first stage, optional intermediate stages, and a final stage. Each intermediate stage is formed in the presence of the polymer resulting from the polymerization of the stage immediately previous to that intermediate stage. In such embodiments wherein each subsequent stage forms a partial or complete shell around each of the particles remaining from the previous stage, the multistage polymer that results is known as a "core/shell" polymer, where the first stage polymer comprises the core and each subsequent stage comprises a shell on the preceding stage with the final stage forming the outermost shell.

As used herein, the term "weight average molecular weight" or "$M_w$" refers to the weight average molecular weight of a polymer as measured by gel permeation chromatography ("GPC"), for acrylic polymers against polystyrene calibration standards following ASTM D5296-11 (2011), and using tetrahydrofuran ("THF") as the mobile phase and diluent. As used herein, the term "weight of polymer" means the dry weight of the polymer.

As used herein, the terms "glass transition temperature" or "$T_g$" refers to the temperature at or above which a glassy polymer will undergo segmental motion of the polymer chain. Glass transition temperatures of a copolymer can be estimated by the Fox equation (Bulletin of the American Physical Society, 1 (3) Page 123 (1956)) as follows:

$$1/T_g = w_1/T_{g(1)} + w_2/T_{g(2)}$$

For a copolymer, $w_1$ and $w_2$ refer to the weight fraction of the two comonomers, and $T_{g(1)}$ and $T_{g(2)}$ refer to the glass transition temperatures of the two corresponding homopolymers made from the monomers. For polymers containing three or more monomers, additional terms are added ($w_n/T_{g(n)}$). The glass transition temperatures of the homopolymers may be found, for example, in the "Polymer Handbook," edited by J. Brandrup and E.H. Immergut, Interscience Publishers. The $T_g$ of a polymer can also be measured by various techniques, including, for example, differential scanning calorimetry ("DSC"). As used herein, the phrase "calculated $T_g$" shall mean the glass transition temperature as calculated by the Fox equation. When the $T_g$ of a multistage polymer is measured, more than one $T_g$ may be observed. The $T_g$ observed for one stage of a multistage polymer may be the same as the $T_g$ that is characteristic of the polymer that forms that stage (i.e., the $T_g$ that would be observed if the polymer that forms that stage were formed and measured in isolation from the other stages). When a monomer is said to have a certain $T_g$, it is meant that a homopolymer made from that monomer has that $T_g$.

A compound is considered "water-soluble" herein if the amount of that compound that can be dissolved in water at 20°C is 5 g or more of compound per 100 ml of water. A compound is considered "water-insoluble" herein if the amount of that compound that can be dissolved in water at 20°C is 0.5 g or less of compound per 100 ml of water. If the amount of a

compound that can be dissolved in water at 20°C is between 0.5 g and 5 g per 100 ml of water, that compound is said herein to be "partially water-soluble."

As used herein, when it is stated that "the polymer composition contains little or no" of a certain substance, it is meant that the polymer composition contains none of that substance, or, if any of that substance is present in the present composition, the amount of that substance is 1% or less by weight, based on the weight of the polymer composition. Among embodiments that are described herein as having "little or no" of a certain substance, embodiments are envisioned in which there is none of that certain substance.

The polymer composition of the present invention contains a multistage polymer made by aqueous emulsion polymerization. In aqueous emulsion polymerization, water forms the continuous medium in which polymerization takes place. The water may or may not be mixed with one or more additional compounds that are miscible with water or that are dissolved in the water. The continuous medium may contain 30 weight % or more water, or 50 weight % or more water, or 75 weight % or more water, or 90 weight % or more water, based on the weight of the continuous medium.

Emulsion polymerization involves the presence of one or more initiator. An initiator is a compound that forms one or more free radical, which can initiate a polymerization process. The initiator is usually water-soluble. Some suitable initiators form one or more free radical when heated. Some suitable initiators are oxidants and form one or more free radical when mixed with one or more reductant, or when heated, or a combination thereof. Some suitable initiators form one or more free radical when exposed to radiation such as, for example, ultraviolet radiation or electron beam radiation. A combination of suitable initiators is also suitable.

Preferably, the multistage polymer is made by emulsion polymerization to form a latex. The latex may have, for example, a mean particle size of 50 nm or higher, or 100 nm or higher. The latex may have, for example, a mean particle size of less than 1 micrometer, or less than 800 nm, or less than 600 nm.

The emulsion polymerization involves the use of at least one organo-phosphorus soap comprising an anionic phosphate surfactant. Each anionic phosphate surfactant has a cation associated with it forming an alkaline metal salt of the phosphate surfactant including, for example, alkyl phosphate salts and alkyl aryl phosphate salts. Suitable cations include, for example, ammonium, cation of an alkali metal, and mixtures thereof. Suitable alkaline metal salts of the phosphate surfactant include, for example, polyoxyalkylene alkyl phenyl ether phosphate salt, polyoxyalkylene alkyl ether phosphate salt, polyoxyethylene alkyl phenyl ether phosphate salt, and polyoxyethylene alkyl ether phosphate salt. The alkaline metal salt of the phosphate surfactant may comprise a polyoxyethylene alkyl ether phosphate salt. The weight of the phosphate surfactant present in emulsion polymerization of the multistage polymer may range from, for example, 0.5 wt% or more, preferably 1.0 wt% or more, and more preferably 1.5 wt% or more, as characterized by weight of phosphate surfactant based on the total monomer weight added to the polymerization. The weight of the phosphate surfactant present in emulsion polymerization of the multistage polymer may range from, for example, 5 wt% or less, preferably 4 wt% or less, and more preferably 3 wt% or less, as characterized by weight of phosphate surfactant based on the total monomer weight added to the polymerization. One or more anionic surfactants in addition to the anionic phosphate surfactant described above may be utilized in the emulsion polymerization. Suitable additional anionic surfactants include, for example, carboxylates, sulfosuccinates, sulfonates, and sulfates.

The multistage polymer may be made, for example, by emulsion polymerization to form a latex. As used herein, the term "latex" refers to the physical form of a polymer in which the polymer is present in the form of small polymer particles that are dispersed in water. The latex may have, for example, a mean particle size of 50 nm or greater or 100 nm or greater. The latex may have a mean particle size of 1,000 nm or less, or 800 nm or less, or 600 nm or less.

The multistage polymer of the present invention contains a first stage polymer containing polymerized units derived from at least one organo-phosphorus monomer. As used herein, the term "organo-phosphorus monomer" refers to a phosphorus-containing monomer. The organo-phosphorus monomer may be in the acid form or as a salt of the phosphorus acid groups. Examples of organo-phosphorus monomers include:

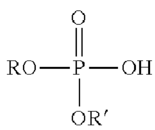 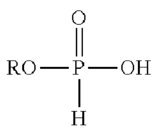

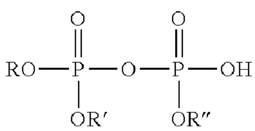 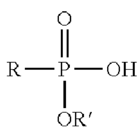 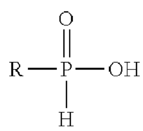

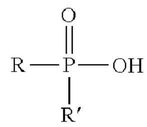

where R is an organic group containing an acryloxy, methacryloxy, or a vinyl group, and R' and R" are independently selected from H and a second organic group. The second organic group may be saturated or unsaturated. Suitable organo-phosphorus monomers include dihydrogen phosphate-functional monomers such as dihydrogen phosphate esters of an alcohol in which the alcohol also contains a polymerizable vinyl or olefinic group, such as allyl phosphate, mono- or diphosphate of bis(hydroxy-methyl) fumarate or itaconate, derivatives of (meth)acrylic acid esters, such as, for examples phosphates of hydroxyalkyl(meth)acrylates including 2-hydroxyethyl (meth)acrylate, 3-hydroxypropyl (meth) acrylates, and the like.

Other suitable organo-phosphorous monomers include $CH_2=C(R)-C(O)-O-(R'O)_n-P(O)(OH)_2$, where R=H or $-CH_3$, R'=alkyl, and n=1 to 5, such as the methacrylates SIPOMER™ PAM-100, SIPOMER™ PAM-200, SIPOMER™ PAM-400, SIPOMER™ PAM-600 and the acrylate, SIPOMER™ PAM-300, available from Solvay.

Other suitable organo-phosphorus monomers are phosphonate functional monomers, disclosed in WO 99/25780 A1, and include vinyl phosphonic acid, allyl phosphonic acid, 2-acrylamido-2-methylpropanephosphonic acid, $\alpha$-phosphonostyrene, 2-methylacrylamido-2-methylpropanephosphonic acid. Further suitable organo-phosphorus monomers are 1,2-ethylenically unsaturated (hydroxy)phosphinylalkyl (meth)acrylate monomers, disclosed in U.S. Pat. No. 4,733,005, and include (hydroxy)phosphinylmethyl methacrylate.

Preferably, the organo-phosphorus monomers comprise at least one compound of formula $CH_2=C(R)-C(O)-O-(R'O)_n-P(O)(OH)_2$. More preferably, R is $-CH_3$, R' is an alkyl group comprising 1 to 6 carbon atoms, and n=1.

The first stage may contain polymerized units derived from the at least one organo-phosphorus monomer in an amount of 0.25 weight % or more, or 0.5 weight % or more, based on the total weight of the first stage polymer. The first stage contains polymerized units derived from the at least one organo-phosphorus monomer in an amount of 2 weight % or less, 1.5 weight % or less, 1.0 weight% or less, 0.95 weight% or less, 0.90 weight% or less, or 0.85 weight% or less, based on the total weight of the first stage polymer. Preferably, the first stage contains polymerized units derived from the at least one organo-phosphorus monomer in an amount ranging from 0.25 to less than 1.0 weight% based on total weight of the first stage polymer. More preferably, the first stage contains polymerized units derived from the at least one organo-phosphorus monomer in an amount ranging from 0.25 to 0.95 weight% based on the total weight of the first stage.

The first stage polymer further comprises polymerized units derived from one or more substituted or unsubstituted dienes, one or more substituted or unsubstituted styrene, one or more substituted or unsubstituted (meth)acrylate monomers, (meth)acrylic acid, or mixtures thereof. Preferably, the first stage polymer comprises polymerized units derived from butadiene.

Preferably, the first stage polymer has a $T_g$ of -20°C or less, or -35°C or less, or -50°C or less. The first stage polymer preferably has a $T_g$ of -150°C or more, or -100°C or more.

The multistage polymer may contain the first stage polymer, for example, in an amount of 10 wt% or more, or 20 wt% or more, or 50 wt% or more, based on the total weight of the multistage polymer. The multistage polymer may contain the first stage polymer in an amount of 98 wt% or less, or 95 wt% or less, or 90 wt% or less, based on the total weight of the multistage polymer.

The first stage of the multistage polymer may contain polymerized units derived from one or more multifunctional monomers. Multifunctional monomers contain two or more functional groups that are capable of participating in a polymerization reaction. Suitable multifunctional monomers include, for example, divinylbenzene, allyl methacrylate, ethylene glycol methacrylate, and 1,3-butylene dimethacrylate. When present, the first stage may contain polymerized units derived from a multifunctional monomer in an amount of 0.01 weight % or more, or 0.03 weight % or more, or 0.1 weight % or more, based on the weight of the total weight of the first stage polymer. When present, the first stage may contain polymerized units derived from a multifunctional monomer in an amount of 5 weight % or less, or 2 weight % or less, based on the weight of the total weight of the first stage polymer.

The first stage of the multistage polymer may contain polymerized units derived from one or more diene monomers. Suitable diene monomers include, for example, butadiene and isoprene. The first stage may contain polymerized units derived from diene monomers in an amount of 2 weight % or more, or 5 weight % or more, or 10 weight % or more, or 20 weight % or more, or 50 weight % or more, or 75 weight % or more, based on the total weight of the first stage polymer. The first stage contains polymerized units derived from diene monomers in an amount of 100 weight % or less, or 98 weight % or less, or 90 weight % or less, based on the total weight of the first stage polymer.

The first stage of the multistage polymer may contain polymerized units derived from one or more of styrene, substituted styrene, or mixtures thereof. Suitable substituted styrenes include, for example, alpha-alkyl styrenes (e.g., alpha-methyl styrene). The first stage may contain polymerized units derived from one or more of styrene and substituted

styrene in an amount of 1 weight % or more, or 2 weight % or more, or 5 weight % or more, or 10 weight % or more, based on the total weight of the first stage polymer. The first stage may contain polymerized units derived from one or more of styrene and substituted styrene in an amount of 80 weight % or less, or 50 weight % or less, or 25 weight % or less, or 10 weight % or less, or 5 weight % or less, based on the total weight of the first stage polymer.

The first stage polymer of the multistage polymer may contain polymerized units derived from acid-functional monomers. An acid-functional monomer is a monomer that has an acid group, for example, a sulfonic acid group or a carboxylic acid group. Suitable acid-functional monomers include, for example, acrylic acid and methacrylic acid. The first stage may contain polymerized units derived from one or more acid functional monomers in an amount of 3 weight % or less, or 2 weight % or less, or 1 weight % or less, or 0.5 weight % or less, based on the total weight of the first stage polymer.

The multistage polymer of the present invention contains a final stage polymer containing polymerized units derived from one or more substituted or unsubstituted styrene, one or more substituted or unsubstituted (meth)acrylate monomers, (meth)acrylic acid, or mixtures thereof.

The final stage polymer may further comprise polymerized units derived from at least one organo-phosphorus monomer. Without wishing to be bound by theory, it is believed that incorporating an organo-phosphorus monomer in both the core and the final stage may further improve flammability.

When present, the final stage may contain polymerized units derived from the at least one organo-phosphorus monomer in an amount of 0.25 weight % or more, or 0.5 weight % or more, based on the total weight of the final stage polymer. The final stage may contain polymerized units derived from the at least one organo-phosphorus monomer in an amount of 5 weight % or less, 4 weight % or less, 3 weight% or less, 2 weight% or less, or 1 weight% or less, based on the total weight of the final stage polymer.

The final stage polymer may have a $T_g$ of 50°C or more, or 90°C or more. The final stage polymer may have a $T_g$ of 200°C or less, or 150°C or less.

The multistage polymer may contain the final stage polymer, for example, in an amount of 2 weight % or more, or 10 weight % or more, or 20 weight % or more, based on the total weight of the multistage polymer. The multistage polymer may contain the final stage polymer, for example, in an amount of 50 weight % or less, or 25 weight % or less, or 10 weight % or less, based on the total weight of the multistage polymer.

Suitable monomers in the final stage include, for example, one or more of styrene, alpha-methyl styrene, methyl methacrylate, and butyl acrylate. Preferably, the monomers in the final stage include styrene and/or methyl methacrylate, and more preferably, comprise styrene and methyl methacrylate.

Preferably, the final stage polymer contains polymerized units derived from monomers having a $T_g$ of 50°C or higher in an amount of 50 wt% or higher, or 75 wt% or higher, or 90 wt% or higher based on the total weight of the final stage polymer.

The weight ratio of the first stage polymer to the final stage polymer may range, for example, from 0.1:1 or higher, or 0.2:1 or higher, or 0.4:1 or higher, or 1:1 or higher, or 1.5:1 or higher, or 3:1 or higher, or 4:1 or higher. The weight ratio of the first stage polymer to the final stage polymer may range, for example, from 50:1 or lower, or 25:1 or lower, or 20:1 or lower.

The multistage polymer may contain one or more intermediate stage polymers. The total sum of the intermediate stage polymers may be present in an amount of 1 weight % or more, or 2 weight % or more, or 5 weight % or more, or 10 weight % or more, based on the total weight of the multistage polymer. The total sum of the intermediate stage polymers may be present in an amount of 60 weight % or less, or 2 weight % or less, or 5 weight % or less, or 10 weight % or less, based on the total weight of the multistage polymer. Like the final stage polymer in the multistage polymer, the one or more intermediate stage polymers may also comprise polymerized units derived from one or more organo-phosphorus monomers.

In the process of the present invention, the multistage polymer latex is isolated by coagulation or spray drying to retain the organo-phosphorus soap on the surface of the multistage polymer. Suitable methods of coagulation include, for example, coagulation with a divalent cation.

Suitable divalent cations include, for example, divalent metal cations and alkaline earth cations. Suitable divalent cations include, for example, calcium (+2), cobalt (+2), copper (+2), iron (+2), magnesium (+2), zinc (+2), and mixtures thereof. Preferably, the multivalent cations are selected from calcium (+2), and magnesium (+2). More preferably, every divalent cation that is present is calcium (+2), or magnesium (+2), or a mixture thereof. Even more preferably, the divalent cation comprises calcium (+2). The divalent cation may be present, for example, in an amount of 10 ppm or more, or 30 ppm or more, or 100 ppm or more, by weight based on the dry weight of multistage polymer. The divalent cation may be present, for example, in an amount of 3 weight % or less, or 1 weight % or less, or 0.3 weight % or less, based on the dry weight of the multistage polymer.

Preferably, most or all of the divalent cation that is present in the composition is in the form of a water insoluble phosphate salt. The molar amount of divalent cation that is present in the form of a water insoluble phosphate salt may be, for example, 80% or more, or 90% or more, or 95% or more, or 98% or more, or 100%, based on the total moles of divalent cation present in the composition.

Preferably, most or all of the water that remains with the isolated polymer is removed from the isolated polymer by one or more of the following operations: filtration (including, for example, vacuum filtration), and/or centrifugation. The isolated polymer maybe optionally washed with water one or more times. Coagulated polymer is a complex structure, and it is known that water cannot readily contact every portion of the coagulated polymer. While not wishing to be bound by theory, it is contemplated that a significant amount of divalent cation and residual organo-phosphorus soap will be left behind. Accordingly, the composition of the present invention may contain organo-phosphorus soap in an amount of 50 ppm or more, or 100 ppm or more, or 500 ppm or more, based on the dry weight of the multistage polymer. The composition of the present invention may contain organo-phosphorus soap in an amount of 10,000 ppm or less, or 7,500 ppm or less, or 5,000 ppm or less, based on the dry weight of the multistage polymer.

Preferably, the dried multistage polymer has a water content of less than 1.0 weight% based on the weight of the dried multistage polymer.

The polymer composition of the present invention may also include a flow aid. A flow aid is a hard material in the form of a powder (mean particle diameter of 1 micrometer to 1 mm). Suitable flow aids include, for example, hard polymers (i.e., polymers having a $T_g$ of 80°C or higher) or a mineral (e.g., silica).

The polymer composition of the present invention may also include a stabilizer. Suitable stabilizers include, for example, radical scavengers, peroxide decomposers, and metal deactivators. Suitable radical scavengers include, for example, hindered phenols (e.g., those having a tertiary butyl group attached to each carbon atom of the aromatic ring that is adjacent to the carbon atom to which a hydroxyl group is attached), secondary aromatic amines, hindered amines, hydroxylamines, and benzofuranones. Suitable peroxide decomposers include, for example, organic sulfides (e.g., divalent sulfur compounds, e.g., esters of thiodopropionic acid), esters of phosphorous acid ($H_3PO_3$), and hydroxyl amines. Suitable metal deactivators include, for example, chelating agents (e.g., ethylenediaminetetraacetic acid).

As noted above, one aspect of the present invention utilizes the polymer composition described herein as an impact modifier in a matrix resin composition containing the multistage polymer composition and a matrix resin. After the mixture of multistage polymer and matrix resin is mixed and melted and formed into a solid item, the impact resistance of that item will be better than the same solid item made with matrix resin that has not been mixed with multistage polymer. The multistage polymer may be provided in a solid form, e.g., pellets or powder or a mixture thereof. The matrix resin may also be provided in solid form, e.g., pellets or powder or a mixture thereof. Solid multistage polymer may be mixed with solid matrix resin, either at room temperature (20°C) or at elevated temperature (e.g., 30°C to 90°C). Alternatively, solid multistage polymer may be mixed with melted matrix resin, e.g., in an extruder or other melt mixer. Solid multistage polymer may also be mixed with solid matrix resin, and the mixture of solids may then heated sufficiently to melt the matrix resin, and the mixture may be further mixed, e.g., in an extruder or other melt-processing device.

The weight ratio of the matrix resin to the multistage polymer of the present invention may range for example, from 1:1 or higher, or 1.1:1 or higher, or 2.3:1 or higher, or 4:1 or higher, or 9:1 or higher, or 19:1 or higher, or 49:1 or higher, or 99:1 or higher.

Suitable matrix resins include, for example, polyolefins, polystyrene, styrene copolymers, poly(vinyl chloride), poly(vinyl acetate), acrylic polymers, polyethers, polyesters, polycarbonates, polyurethanes, and polyamides. Preferably, the matrix resin contains at least one polycarbonate. Suitable polycarbonates include, for example homopolymers of polymerized units derived from Bisphenol A ("BPA"), and also copolymers that include polymerized units of BPA along with one or more other polymerized units.

The matrix resin may contain at least one polyester. Suitable polyesters include, for example, polyethylene terephthalate and polybutylene terephthalate.

The matrix resin may contain a blend of polymers. Suitable blends of polymers include, for example, blends of polycarbonates and styrene resins, and blends of polycarbonates and polyesters. Suitable styrene resins include, for example, polystyrene and copolymers of styrene with other monomers, e.g., acrylonitrile/butadiene/styrene ("ABS") resins.

The matrix resin composition containing multistage polymer and matrix resin may contain one or more additional materials that are added to the mixture. Any one or more of such additional materials may be added to the multistage polymer or to the matrix resin prior to formation of the final mixture of all materials. Each of the additional materials (if any are used) may be added (alone or in combination with each other and/or in combination with multistage polymer) to matrix resin when matrix resin is in solid form or in melt form. Suitable additional materials include, for example, dyes, colorants, pigments, carbon black, fillers, fibers, lubricants (e.g., montan wax), flame retardants (e.g., borates, antimony trioxide, or molybdates), and other impact modifiers that are not multistage polymers of the present invention.

The matrix resin composition may be used to form a useful article, for example by film blowing, profile extrusion, molding, other methods, or a combination thereof. Molding methods include, for example, blow molding, injection molding, compression molding, other molding methods, and combinations thereof.

The multistage polymer of the present invention may provide significant improvements in the flammability of the matrix resin composition.

Some embodiments of the invention will now be described in detail in the following Examples.

EXAMPLES

Example 1

*Preparation of Flame Resistant Methacrylate Butadiene Styrene (FR MBS)*

A stainless steel autoclave with an agitator and several entry ports was charged 66 parts of DOWFAX™ 2A1 surfactant from Dow Company in 7390 parts of deionized water and 9.6 parts of sodium formaldehyde sulfoxylate. The autoclave was evacuated and 5272 parts of butadiene, 75 parts of SIPOMER™ PAM-600 (55% active) from Solvay Company and 52 parts of t-Butyl hydroperoxide were added and caused to react at 70°C over a ten hour period. An additional 208.2 parts of RHODAFAC® RS-610 Phosphate surfactant from Solvay Company emulsifier was also added. At the end of the reaction period no further pressure drop was observed, the reaction pressure was vented.

To 2000 parts of the rubber latex having approximately 40% solids, as prepared above, were added 88.7 parts of styrene and 207 parts of methylmethacrylate followed by 0.23 parts of sodium formaldehyde sulfoxylate dissolved in 10 parts of deionized water and 0.37 parts of 70% active strength tert-butyl hydroperoxide. One hour after the completion of the exotherm, 0.58 parts of sodium formaldehyde sulfoxylate dissolved in 24 parts of deionized water and 0.93 parts of 70% active strength tert-butyl hydroperoxide were added and caused to react to completion. The resulting multistage polymer latex had approximately 45% solids.

This latex was treated with a 20% solids emulsion of octadecyl 3-(3,5-ditert-butyl-4-hydroxyphenyl)propanoate (available as IRGANOX® 1076 from BASF) to deliver 3.0% hindered phenol antioxidant, solids on solids. The latex was then coagulated by adding it over a 1 minute period with good mixing to 8000 grams of 0.14% Calcium Chloride coagulant solution at a temperature of 54°C. The slurry thus formed was then was heated to 80°C for a period of one hour. The slurry was filtered by centrifuge to create a wet cake. The wet cake was washed with water on the centrifuge until the conductivity of the effluent water reached 50 μS/cm. The washed wet cake collected from the centrifuge had a solids level of approximately 35%, labeled herein impact modifier (IM) wet cake. The IM wet cake was then dried by a vacuum oven held at 50°C for 16 hours to form a powder, herein called "FR MBS powder."

**Comparative Example**

***Preparation of Comparative Polymer Composition M732***

The IM powder of this example was product name M-732 manufactured by Kaneka Corporation.

The rubber component is polybutadiene. The product type is core/shell type methacrylate-butadiene-styrene copolymer. The ratio of butadiene, styrene, methylmethacrylate and RHODAFAC® RS-610 and Calcium are equal to the ratios of Example 1. The antioxidant octadecyl 3-(3,5-ditert-butyl-4-hydroxyphenyl)propanoate is present at 3.0 weight percent.

***Polycarbonate Formulation***

Polycarbonate formulations were prepared with the FR MBS powder of Example 1 and the M732 powder of the Comparative Example. The formulations in accordance with Table 1 were compounded in an extruder to create pellets for injection molding.

Table 1

| Formulation | Discription | Loading level (%) | Physical form |
|---|---|---|---|
| **PC Lexan 141** | Base resin | | Pellets |
| **MBS** | Impact modifier | 2.50 | Powder |
| **FR-2025a** | FR | 0.10 | Powder |
| **INP449** | PTFE 50% MB | 0.50 | Powder |
| **Irg 1076** | BASF AO | 0.10 | Powder |

(continued)

| Formulation | Discription | Loading level (%) | Physical form |
|---|---|---|---|
| **Irg 168** | BASF AO | 0.10 | powder |
| PC Lexan 141: Polycarbonate from SABIC<br>MBS: FR MBS powder of Example 1 or M732 powder of Comparative Example<br>FR-2025a: 100% potassium perfluorobutane sulfonate from 3M<br>INP449: blend of 50% polytetrafluoroethylene and 50% SAN from SABIC<br>IRGANOX® 1076 and IRGANOX® 168: anti-oxidants from BASF | | | |

The polycarbonate formulations were injection molded to form double end-gated 1.0 mm ASTM burn bars for flammability testing using the UL 94 flammability test method. The injection molding conditions are shown below in Table 2.

Table 2

| **Barrel Temperature (Zone 1, 2, 3, 4, Nozzle)** | **°F** | **525 straight profile** |
|---|---|---|
| **Mold Temperature** | °F | 120 |
| **Hold Time** | s | 6 |
| **Hold Pressure** | psi | 17500 |
| **Cooling Time** | s | 18 |
| **Back Pressure** | psi | 1000 |
| **Screw Speed** | rpm | 25 |
| **Injection Speed** | cc/s | 65 |
| **Cushion** | cc | 11 |
| **Transfer** | cc | 13 |
| **Shot Size** | cc | 36 |
| **Suck Back** | cc | 1 |

The results of the UL 94 test are shown in the graph of FIG. 1, which shows the total burn time after torch for 5 bars. As can be seen in the graph in FIG. 1, the FR MBS powder of Example 1 provided a significant improvement in the flammability of the polycarbonate composition compared to the polycarbonate composition comprising the M732 powder of the Comparative Example. The difference in flammability is further demonstrated by the photographs in FIGS. 2A and 2B. As shown in FIG. 2A, the polycarbonate formulation comprising the FR MBS of inventive Example 1 exhibited little visible flame damage. In contrast, the polycarbonate formulation comprising the M732 powder of the Comparative Example exhibited significant flame damage.

## Claims

**1.** A polymer composition comprising:

(i) one or more multistage polymers comprising

(a) a first stage polymer, wherein the first stage polymer comprises polymerized units derived from at least one organo-phosphorus monomer in an amount of 2 wt.% or less, based on the total weight of the first stage polymer, and
(b) a final stage polymer; and

(ii) at least one organo-phosphorus soap in an amount of 50 ppm or more, based on the dry weight of the multistage polymer.

**2.** The polymer composition of claim 1, wherein

the first stage polymer further comprises polymerized units derived from one or more of ethyl hexyl acrylate, butyl acrylate, butadiene, isoprene, styrene, alpha-methyl styrene, acrylic acid, and methacrylic acid, and
the final stage polymer comprises polymerized units derived from one or more of styrene, alpha-methyl styrene, methyl methacrylate, and butyl acrylate.

**3.** The polymer composition of claim 1 or 2, wherein

the first stage polymer comprises polymerized units derived from butadiene and at least one organo-phosphorus monomer; and
the final stage polymer comprises polymerized units derived from styrene and methyl methacrylate.

**4.** The polymer composition of any one of the preceding claims, wherein the at least one organo-phosphorus monomer is a compound of formula $CH_2=C(R)-C(O)-O-(R'O)_n-P(O)(OH)_2$, wherein R is H or $-CH_3$, R' is an alkyl and n ranges from 1 to 5.

**5.** The polymer composition of claim 4, wherein R is $-CH_3$ and R' is an alkyl group comprising 1 to 6 carbon atoms.

**6.** The polymer composition of any one of the preceding claims, wherein the first stage polymer is present in an amount of from 10 to 98 weight %, based on the total weight of the multistage polymer, and the final stage polymer is present in an amount of from 2 to 50 weight %, based on the total weight of the multistage polymer.

**7.** The polymer composition of any one of the preceding claims, wherein the organo-phosphorus soap comprises one or more of polyoxyalkylene alkyl phenyl ether phosphate salt, polyoxyalkylene alkyl ether phosphate salt, polyoxyethylene alkyl phenyl ether phosphate salt, and polyoxyethylene alkyl ether phosphate salt.

**8.** The polymer composition of any one of the preceding claims, wherein the multistage polymer is a latex polymer with a mean particle size of from 50 nm to 1 micrometer.

**9.** The polymer composition of any one of the preceding claims, wherein the at least one organo-phosphorus monomer is present in the first stage polymer in an amount less than 1 wt% based on the total weight of the first stage polymer.

**10.** The polymer composition according to any one of the preceding claims, wherein the final stage comprises polymerized units derived from one or more organo-phosphorus monomers.

**11.** A matrix resin composition comprising mixing one or more matrix resins and the polymer composition of any one of the preceding claims.

**12.** The matrix resin composition of claim 11, wherein the matrix resin is selected from the group consisting of one or more polycarbonate, one or more polycarbonate blended with one or more polyester, and one or more polycarbonate blended with one or more ABS resin.

**13.** The matrix resin composition of claim 12, wherein the matrix resin comprises polycarbonate.

**14.** The matrix resin composition of claim 13, wherein the polymer composition is present in an amount less than 5 wt% based on the total weight of the matrix resin composition.

**Patentansprüche**

**1.** Polymerzusammensetzung, umfassend:

(i) ein oder mehrere mehrstufige Polymere, umfassend

(a) ein Polymer der ersten Stufe, wobei das Polymer der ersten Stufe polymerisierte Einheiten umfasst, die aus mindestens einem Organophosphormonomer in einer Menge von 2 Gew.-% oder weniger bezogen auf das Gesamtgewicht des Polymers der ersten Stufe stammen, und
(b) ein Polymer der Endstufe; und

(ii) mindestens eine Organophosphorseife in einer Menge von 50 ppm oder mehr bezogen auf das Trockengewicht des mehrstufigen Polymers.

**2.** Polymerzusammensetzung nach Anspruch 1, wobei

das Polymer der ersten Stufe ferner polymerisierte Einheiten umfasst, die von einem oder mehreren von Ethylhexylacrylat, Butylacrylat, Butadien, Isopren, Styrol, alpha-Methylstyrol, Acrylsäure und Methacrylsäure stammen, und
das Polymer der Endstufe polymerisierte Einheiten umfasst, die von einem oder mehreren von Styrol, alpha-Methylstyrol, Methylmethacrylat und Butylacrylat stammen.

**3.** Polymerzusammensetzung nach Anspruch 1 oder 2, wobei

das Polymer der ersten Stufe polymerisierte Einheiten umfasst, die von Butadien und mindestens einem Organophosphormonomer stammen; und
das Polymer der Endstufe polymerisierte Einheiten umfasst, die von Styrol und Methylmethacrylat stammen.

**4.** Polymerzusammensetzung nach einem der vorstehenden Ansprüche, wobei das mindestens eine Organophosphormonomer eine Verbindung der Formel $CH_2=C(R)-C(O)-O-(R'O)_n-P(O)(OH)_2$ ist, wobei R H oder $-CH_3$ ist, R' ein Alkyl ist und *n* im Bereich von 1 bis 5 liegt.

**5.** Polymerzusammensetzung nach Anspruch 4, wobei R $-CH_3$ ist und R' eine Alkylgruppe ist, die 1 bis 6 Kohlenstoffatome umfasst.

**6.** Polymerzusammensetzung nach einem der vorstehenden Ansprüche, wobei das Polymer der ersten Stufe in einer Menge von 10 bis 98 Gew.-% bezogen auf das Gesamtgewicht des mehrstufigen Polymers vorliegt und das Polymer der Endstufe in einer Menge von 2 bis 50 Gew.-% bezogen auf das Gesamtgewicht des mehrstufigen Polymers vorliegt.

**7.** Polymerzusammensetzung nach einem der vorstehenden Ansprüche, wobei die Organophosphorseife eines oder mehrere von Polyoxyalkylenalkylphenyletherphosphatsalz, Polyoxyalkylenalkyletherphosphatsalz, Polyoxyethylenalkylphenyletherphosphatsalz und Polyoxyethylenalkyletherphosphatsalz umfasst.

**8.** Polymerzusammensetzung nach einem der vorstehenden Ansprüche, wobei das mehrstufige Polymer ein Latexpolymer mit einer mittleren Partikelgröße von 50 nm bis 1 Mikrometer ist.

**9.** Polymerzusammensetzung nach einem der vorstehenden Ansprüche, wobei das mindestens eine Organophosphormonomer im Polymer der ersten Stufe in einer Menge von weniger als 1 Gew.-% bezogen auf das Gesamtgewicht des Polymers der ersten Stufe vorliegt.

**10.** Polymerzusammensetzung nach einem der vorstehenden Ansprüche, wobei die Endstufe polymerisierte Einheiten umfasst, die von einem oder mehreren Organophosphormonomeren stammen.

**11.** Matrixharzzusammensetzung, umfassend das Mischen eines oder mehrerer Matrixharze und der Polymerzusammensetzung nach einem der vorstehenden Ansprüche.

**12.** Matrixharzzusammensetzung nach Anspruch 11, wobei das Matrixharz ausgewählt ist aus der Gruppe bestehend aus einem oder mehreren Polycarbonaten, einem oder mehreren Polycarbonaten, die mit einem oder mehreren Polyestern vermischt sind, und einem oder mehreren Polycarbonaten, die mit einem oder mehreren ABS-Harzen vermischt sind.

**13.** Matrixharzzusammensetzung nach Anspruch 12, wobei das Matrixharz Polycarbonat umfasst.

**14.** Matrixharzzusammensetzung nach Anspruch 13, wobei die Polymerzusammensetzung in einer Menge von weniger als 5 Gew.-% bezogen auf das Gesamtgewicht der Matrixharzzusammensetzung vorliegt.

## Revendications

1. Composition polymère comprenant :

   (i) un ou plusieurs polymères multi-étages comprenant

      (a) un polymère de premier étage, dans laquelle le polymère de premier étage comprend des motifs polymérisés dérivés d'au moins un monomère organophosphoré en une quantité inférieure ou égale à 2 % en poids par rapport au poids total du polymère du premier étage, et
      (b) un polymère d'étage final ; et

   (ii) au moins un savon organophosphoré en une quantité supérieure ou égale à 50 ppm, par rapport au poids sec du polymère multi-étages.

2. Composition polymère selon la revendication 1, dans laquelle

   le polymère de premier étage comprend en outre des motifs polymérisés dérivés d'un ou plusieurs parmi : acrylate d'éthyle hexyle, acrylate de butyle, butadiène, isoprène, styrène, alpha-méthylstyrène, acide acrylique et acide méthacrylique, et
   le polymère d'étage final comprend des motifs polymérisés dérivés d'un ou plusieurs parmi styrène, alpha-méthylstyrène, méthacrylate de méthyle et acrylate de butyle.

3. Composition polymère selon la revendication 1 ou 2, dans laquelle

   le polymère de premier étage comprend des motifs polymérisés dérivés du butadiène et d'au moins un monomère organophosphoré ; et
   le polymère d'étage final comprend des motifs polymérisés dérivés du styrène et du méthacrylate de méthyle.

4. Composition polymère selon l'une quelconque des revendications précédentes, dans laquelle l'au moins un monomère organophosphoré est un composé de formule $CH_2=C(R)-C(O)-O-(R'O)_n-P(O)(OH)_2$, où R est H ou $-CH_3$, R' est un alkyle et *n* va de 1 à 5.

5. Composition polymère selon la revendication 4, dans laquelle R est $-CH_3$ et R' est un groupe alkyle comprenant 1 à 6 atomes de carbone.

6. Composition polymère selon l'une quelconque revendication précédente, dans laquelle le polymère de premier étage est présent en une quantité allant de 10 à 98 % en poids par rapport au poids total du polymère multi-étages, et le polymère d'étage final est présent en une quantité allant de 2 à 50 % en poids par rapport au poids total du polymère multi-étages.

7. Composition polymère selon l'une quelconque des revendications précédentes, dans laquelle le savon organophosphoré comprend un ou plusieurs parmi sel de phosphate d'éther alkylphénylique de polyoxyalkylène, sel de phosphate d'éther alkylique de polyoxyalkylène, sel de phosphate d'éther alkylphénylique de polyoxyéthylène et sel de phosphate d'éther alkylique de polyoxyéthylène.

8. Composition polymère selon l'une quelconque des revendications précédentes, dans laquelle le polymère multi-étages est un polymère en latex avec une taille moyenne de particule de 50 nm à 1 micromètre.

9. Composition polymère selon l'une quelconque des revendications précédentes, dans laquelle l'au moins un monomère organophosphoré est présent dans le polymère de premier étage en une quantité inférieure à 1 % en poids par rapport au poids total du polymère de premier étage.

10. Composition polymère selon l'une quelconque des revendications précédentes, dans laquelle l'étage final comprend des motifs polymérisés dérivés d'un ou plusieurs monomères organophosphorés.

11. Composition de résine matricielle comprenant le mélange d'une ou plusieurs résines matricielles et de la composition de polymère selon l'une quelconque des revendications précédentes.

**12.** Composition de résine matricielle selon la revendication 11, dans laquelle la résine matricielle est choisie dans le groupe constitué d'un ou plusieurs polycarbonates, d'un ou plusieurs polycarbonates mélangés à un ou plusieurs polyesters, et d'un ou plusieurs polycarbonates mélangés à une ou plusieurs résines ABS.

**13.** Composition de résine matricielle selon la revendication 12, dans laquelle la résine matricielle comprend du polycarbonate.

**14.** Composition de résine matricielle selon la revendication 13, dans laquelle la composition polymère est présente en une quantité inférieure à 5 % en poids par rapport au poids total de la composition de résine matricielle.

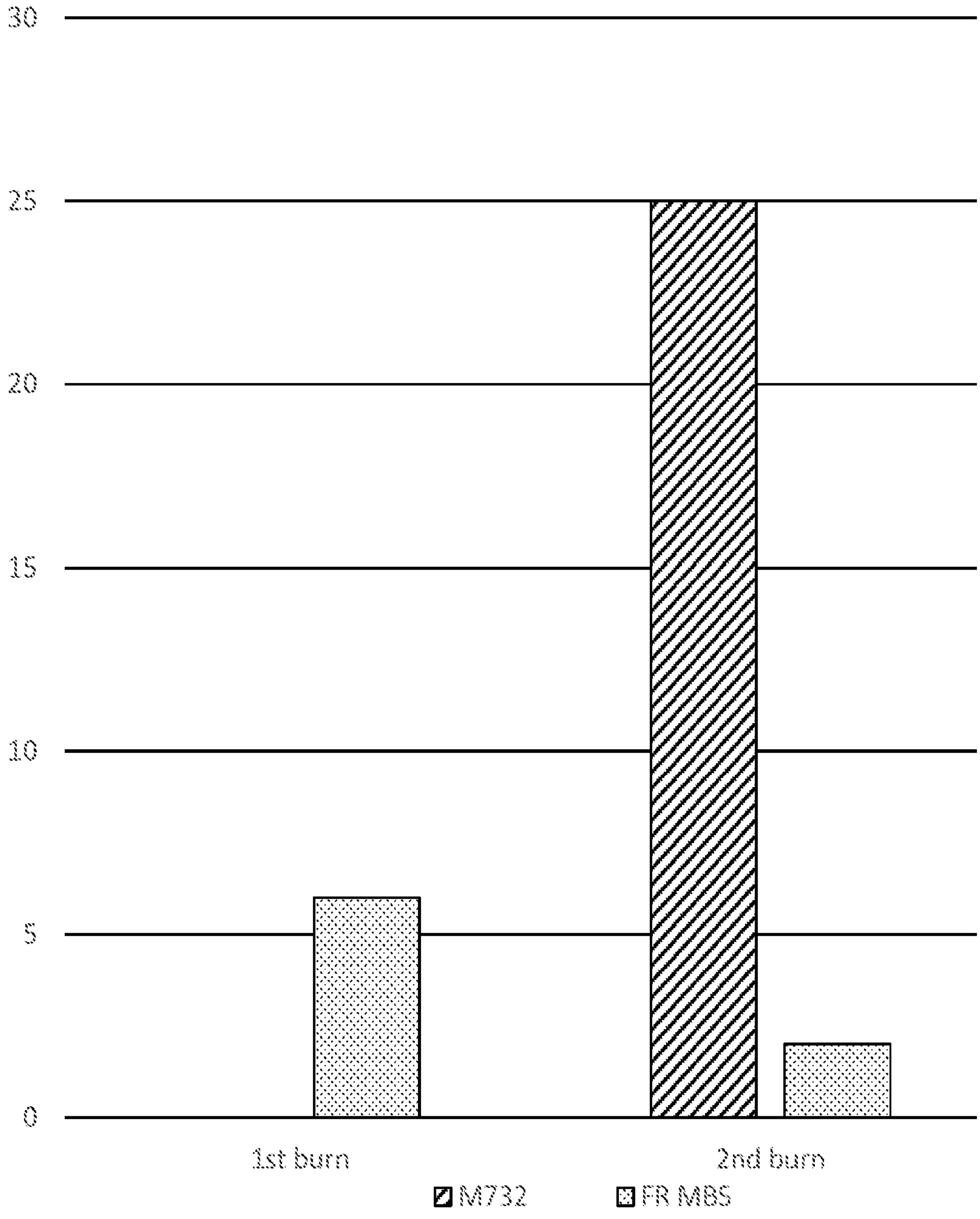


FIG. 1

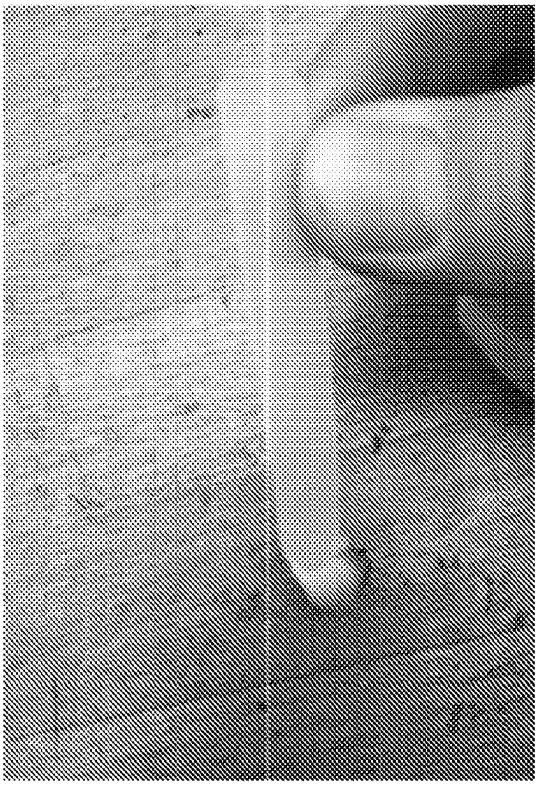

FIG. 2A

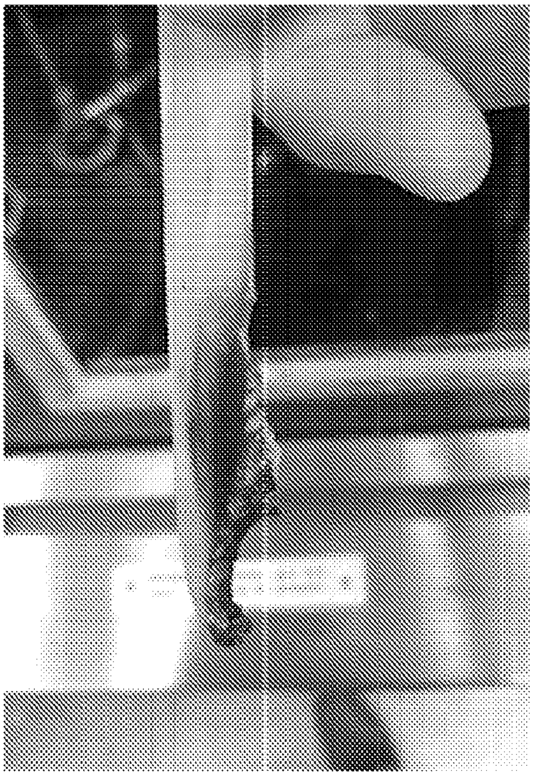

FIG. 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5219907 A
- EP 0663410 A
- EP 3031836 A1
- WO 9925780 A1
- US 4733005 A


### Non-patent literature cited in the description


- **FOX**. *Bulletin of the American Physical Society*, 1956, vol. 1 (3), 123
- Polymer Handbook. Interscience Publishers